# EUROPEAN PATENT APPLICATION

(11) **EP 0 801 895 A2**
(43) Date of publication of application: **22.10.1997**
(21) Application number: 97302593.5
(22) Date of filing: 16.04.1997
(51) Int. Cl.: A01K 97/02

(54) **A device for attachement to a fishing rod or pole and for carrying bait**

(30) Priority: 16.04.1996 GB 9607875
(71) Applicant: FOX DESIGN INTERNATIONAL LIMITED, Chelmsford, Essex CM3 5HQ (GB)
(72) Inventor: Griffin, George Ernest, Timberley, Altrincham, Cheshire (GB)
(74) Representative: Crouch, David John

(57) **Abstract**

A device for attachment to a fishing rod or pole and for carrying bait comprises a pot,2, a means to clamp the pot to the rod or pole and an optional lid mechanism to prevent premature discharge of the pot's contents. The clamp mechanism,4, comprising of any number of members, the gripping means provided with the use of a suitable elastic/spring assembly. The lid mechanism,17, comprising of any number of members is attached by a hinge to the top outside edge of the pole cup. At the opposite edge of the lid, a locking mechanism is attached by a hinge to the lid. This locking mechanism extends down the outside of the cup and then partially under the base of the cup. The lid mechanism is operated when the device is placed in an inverted position, allowing any contents of the pot to be discharged.

## Description

This invention relates to a device for attachment to a fishing rod or pole and is used for carrying bait.

Pole pots are a useful fishing accessory made up of a pot arrangement attached to a fishing rod or pole, and used for delivering bait to the exact location in the water being fished as required by the angler. The pole pot is attached to the end of the rod, filled with bait and transported out over the water on the rod to the desired spot as required, where the rod is twisted so as the contents of the cup are emptied into the water. The pole pot is attached to the rod by means of a clamp which is attached to the underside of the cup. The clamp mechanism is depressed, the tip of the rod fed through the aperture and the clamp is released and grips the rod sufficiently to hold the cup firmly on the rod. The pole pot can have a lid mechanism to prevent premature release of the bait due to the natural whipping action of the rod which occurs as the rod is extended out over the water. The lid mechanism operates as soon as the angler rotates the rod putting the pole pot into an inverted position allowing the contents of the pot to fall into the water below.

According to the invention there is provided a device for attachment to a fishing rod or pole and for carrying bait. The device comprising a pot, a means to attach the pot to the rod or pole and a lid mechanism. The lid mechanism comprising any number of suitable members, prevents or inhibits inadvertent discharge of the contents of the pot until it is placed in an approximate inverted position. The lid mechanism may be attached by a hinge to the top outside edge of the pole cup. This hinge may be manufactured as an integral part of the pot or attached by any suitable method. At the opposite edge of the lid, a locking mechanism is attached by a hinge to the lid. This locking mechanism extends down the outside of the cup and then partially under the base of the cup. The locking mechanism may comprise of any number of suitable members. The attachment means may be in the form of a clamping mechanism comprising any number of members, the clamping force achieved by the use of a suitable elastic/spring assembly.

Three embodiments of the invention will now be described by way of example with reference to the accompanying drawings, in which:
- Fig. 1: The first embodiment, shows a side, end and plan elevation of the basic Pole Pot;
- Fig. 2: Shows in greater detail the clamp mechanism;
- Fig. 3: Shows the operation of the clamp mechanism;
- Fig. 4: The second embodiment, is the views of Fig. 1 with the lid mechanism attached;
- Fig. 5: Is the fully labelled side elevation from Fig. 4;
- Fig. 6: Is a series of diagrams illustrating the operation of the lid mechanism;
- Fig. 7: The third embodiment showing a "clip-together" design to aid manufacture;
- Fig. 8: Is the fully labelled side elevation from Fig. 7;
- Fig. 9: Shows an alternate design for the lid mechanism to allow attachment to non-lid variants;
- Fig. 10: Is the fully labelled side elevation of Fig. 9;
- Fig. 11: Shows a side view of a modified form of clamp mechanism; and
- Figs. 12: to 16 show, respectively, top, side and end views of a first part, and top and side views of a second part of the clamp mechanism shown in Fig. 11.

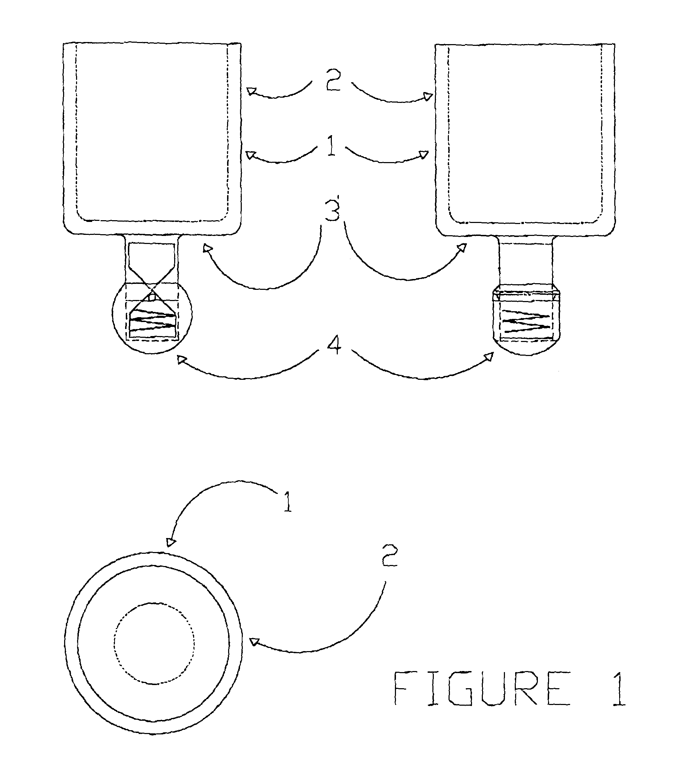

The device,1, of Fig. 1, the first embodiment, comprises a cylindrical open top pot,2, which has a flat base,3. Protruding from the base,3, is the clamp mechanism,4, which is co-axial with the axis of the cylindrical pot.

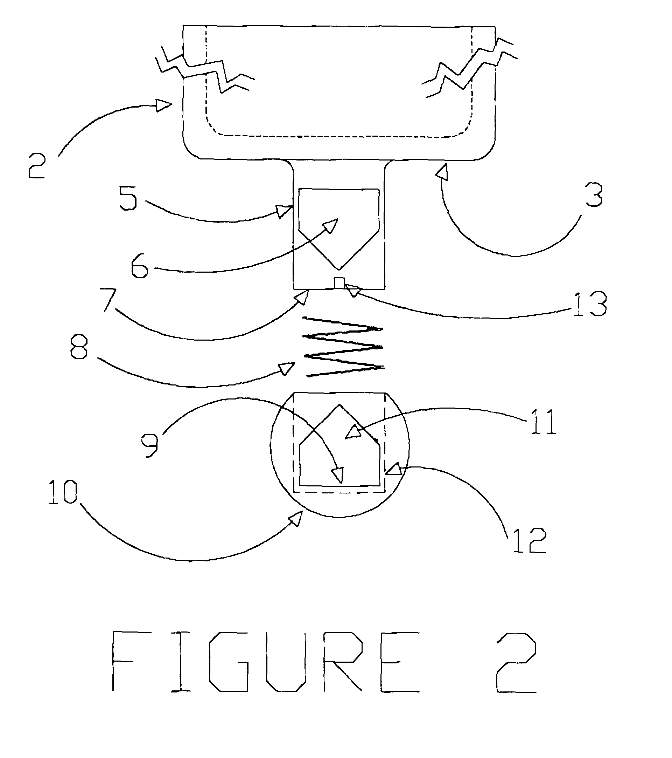

The clamp mechanism,4, shown in greater detail in Fig. 2, can comprise of any suitable number of members, but preferably there are only three members. A cylindrical boss,5, extending from the base,3, has a channel,6, extending laterally through it. The cylindrical boss,5 may be manufactured separately from the pot,2, and attached later by any suitable means, or to aid manufacture can be an integral part of the pot,2. A clamp end assembly,10, has a cylindrical hole,12, which extends from the top of the clamp end assembly,10 into the clamp end assembly,10. The diameter of the hole,12, is such that the cylindrical boss,5, will mate with the cylindrical hole,12, with little play. A channel,11, extends laterally through the clamp end assembly,10, and is of similar dimensions to that of channel,6. The boss,5 and the clamp end assembly,10 can be manufactured in any shape or form, as long as the channels 6 and 10 perform the clamping operation on the rod or pole as required.

A spring unit,8, is positioned between boss face,7, and the clamp end assembly face,9. The spring unit,8, provides the clamp force required to grip the end of the pole or rod. Two small wedge shaped clips,13, protrude from the sides of the cylindrical boss,5, and are diametrically opposite each other. The wedge shaped clips,13, hold the clamp components together when assembled.

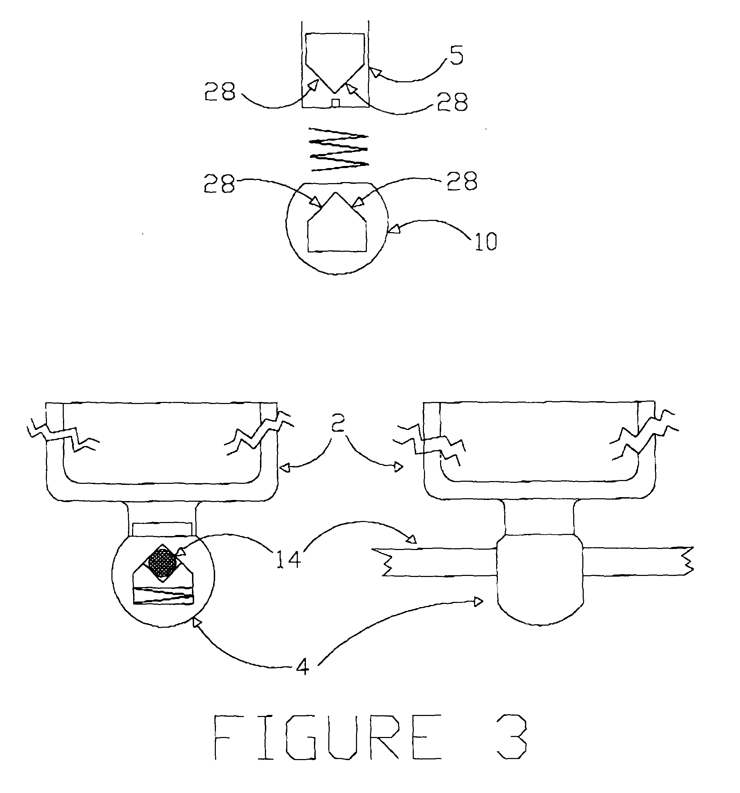

Referring to Fig. 2 and Fig. 3, in operation, the clamp end assembly,10, is pressed firmly up against the pressure of the spring unit,8, acting between the boss face,7, and the clamp end assembly face,9, so as the cylindrical boss,5, extends as far as possible into the cylindrical hole,12, within the clamp end assembly,10. This causes the channel,11, to move relative to channel,6, and so allow sufficient clearance between the clamping surfaces,28, to insert the rod or pole through the gap. Once the clamp and so the pot is in the desired position, the clamp end assembly,10, is released, and the clamping surfaces,28, firmly grip the rod or pole with the gripping force provided from the tension in the spring unit,8, between the boss face,7, and the clamp end assembly face,9. Fig. 3 further serves to illustrate the position of the rod or pole,14, when inserted into the clamp mechanism,4.

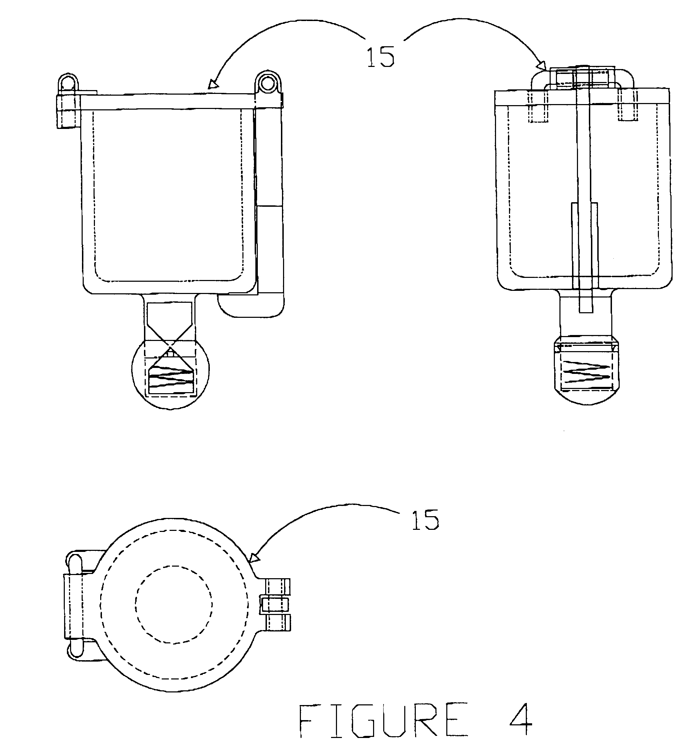

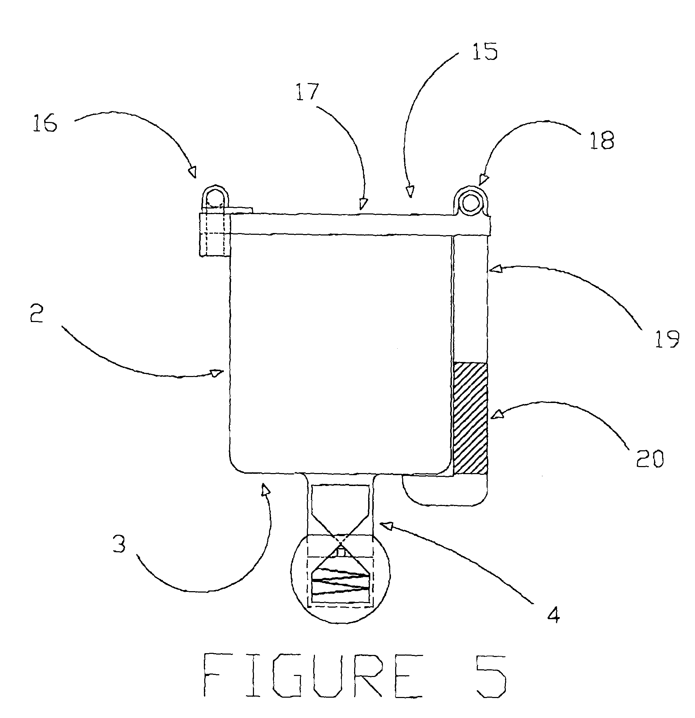

Fig. 4. The second embodiment combines Fig. 1 with the lid mechanism,15. The lid mechanism,15, as shown in greater detail in Fig. 5, can comprise of any number of suitable members. The lid,17, pivots about hinge unit,16. The hinge unit,16, can be manufactured as an integral part of pot,2, or can be manufactured separately and attached to the side of pot,2, by any suitable method. Diametrically opposite hinge unit,16, and part of lid,17, is hinge unit, 18. Locking arm,19, pivots about hinge unit,18. When locking arm,19, is in position as shown, it extends part way under base,3. At the lower end of locking arm,19, is the weight assembly,20. The weight assembly,20, is designed to make the locking arm,19, to be bottom heavy. The weight assembly,20, can be manufactured from any suitable material.

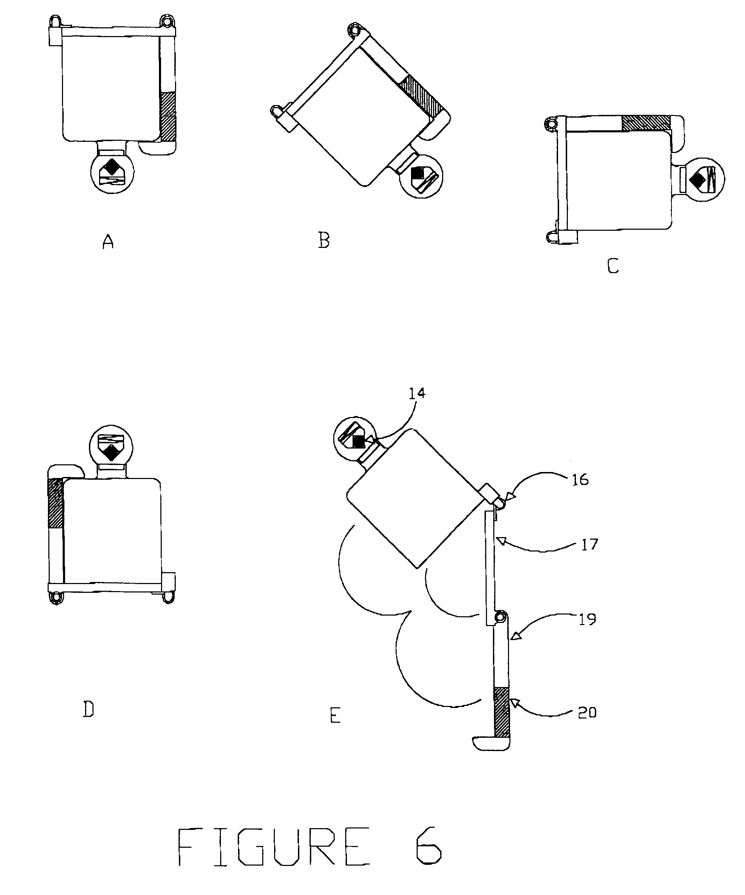

Fig. 6 serves to illustrate the operation of the lid mechanism,15. The complete pole pot as shown in Fig. 5, is attached to a rod or pole,14. Each diagram in Fig. 6 shows the rod or pole,14, and pot complete with the lid mechanism gradually rotated through varying angles, until the weight assembly,20, aided by gravity, takes charge of the locking arm,19, and the lid,17, causing the lid,17, to swing open about the hinge unit,16, and thereby allowing any contents of the pot to be discharged.

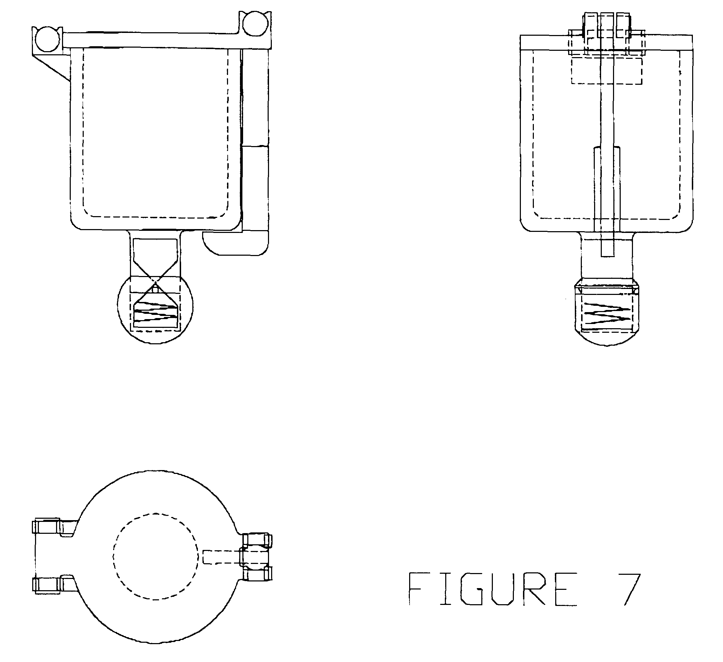

Fig. 7. The third embodiment, illustrates a "clip-together" design based on that shown in Fig. 4, intended to aid manufacture.

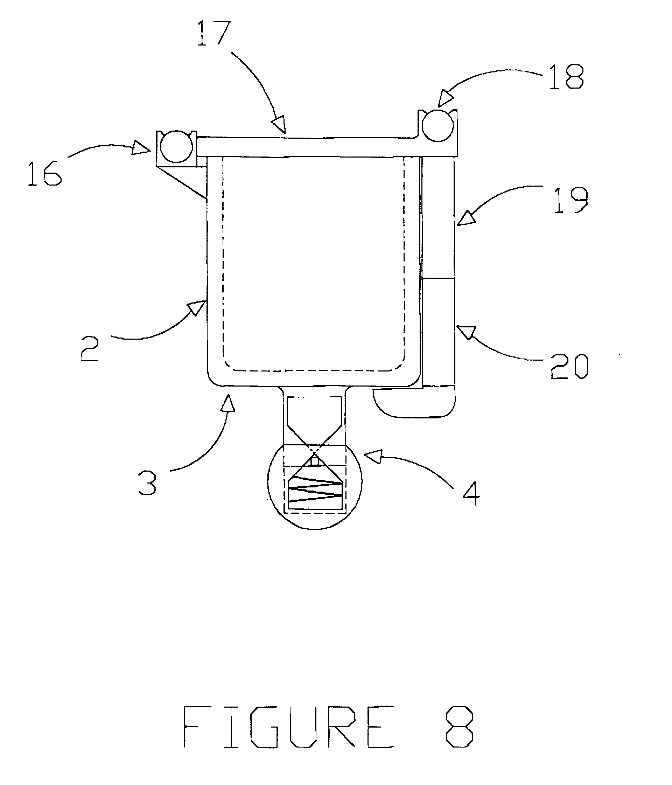

Fig. 8 Is the fully labelled side elevation taken from Fig. 7.

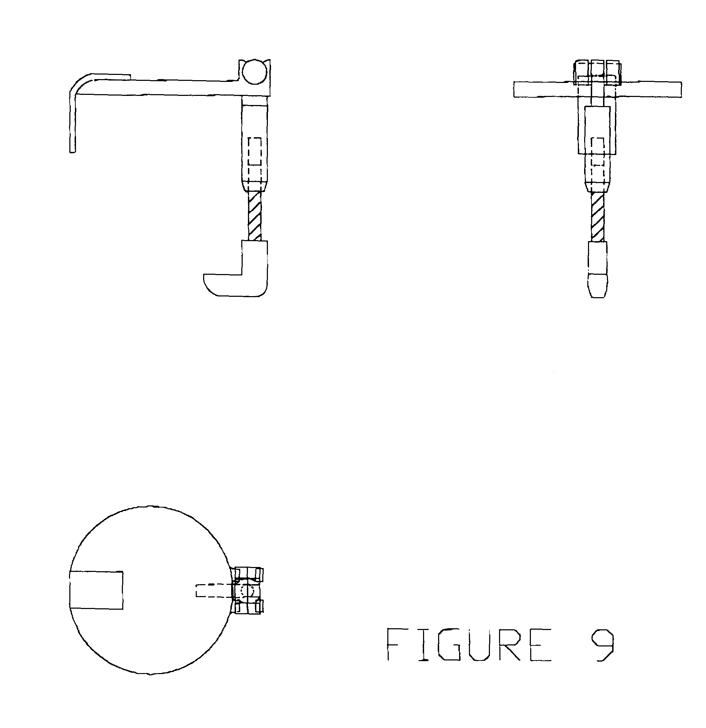

Fig. 9 Illustrates an alternative design for the lid mechanism,15, to allow the lid mechanism,15, to be attached to non-lid variants, as illustrated in Fig. 1.

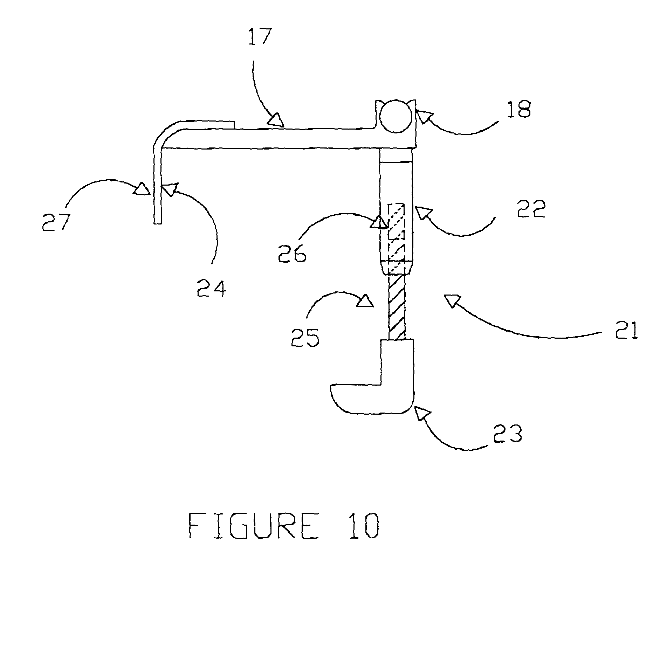

Fig. 10 Is the fully labelled side elevation from Fig. 9. The modified locking arm,21, consists of barrel assembly,22, and hook assembly,23. The barrel assembly,22, has a cylindrical hole,26, extending from the base of the barrel assembly,22, to part way up the barrel assembly's length. The hook assembly,23, has a threaded shaft,25, which mates within the cylindrical hole,26, and allows adjustment of the overall length of the locking arm,21. This adjustable feature allows for the variations in overall pot height. The hook assembly,23, is preferably manufactured from some suitable form of weighted material. Referring to Fig. 5 and Fig. 10, the hinge unit,16, has been replaced in Fig. 10 by a flexible hinge unit,27. The flexible hinge unit,27, can be manufactured from any suitable material, but preferably from some form of strong, flexible self-adhesive tape. On the inside surface of the flexible hinge unit,27, is a self-adhesive surface,24. The self-adhesive surface,24, is used to attach the modified lid assembly Fig. 10 to the side of the lidless pot.

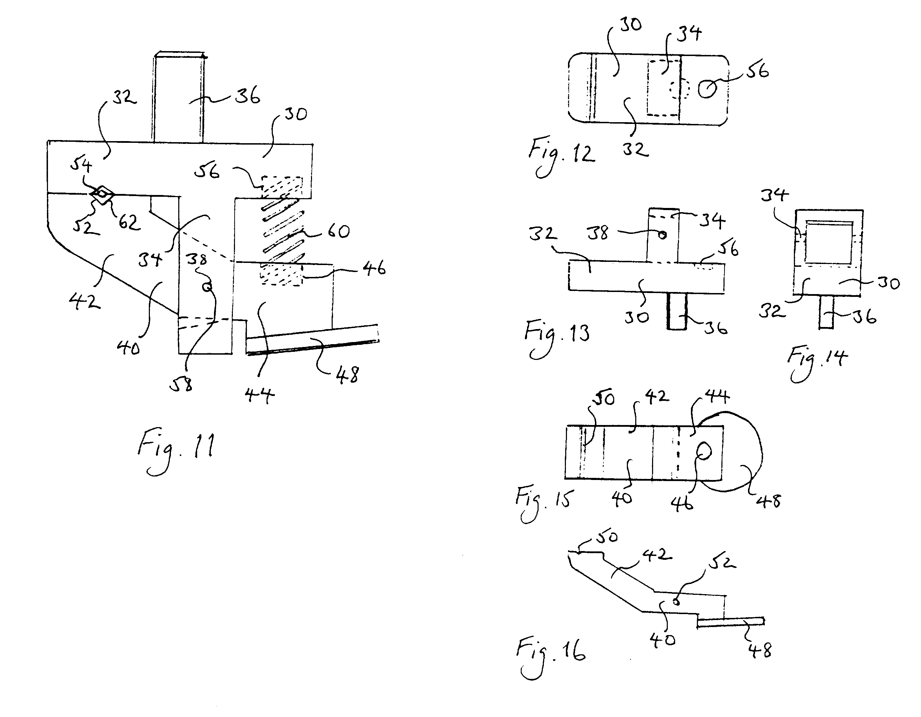

Figures 11 to 16 show a modified form of clamping means. A first part 30 comprises a generally rectangular block portion 32 from one main face of which extends a cradle portion 34 and from the opposite main face of which extends an externally screw-threaded shank 36. The latter engages a correspondingly internally screw-threaded hole or recess in the base of the pot which would have the clamp mechanism 4 shown in Figs. 1 to 8 omitted. The cradle portion 34 has two pivot holes 38 formed in opposite sides thereof defining a pivot axis extending transversely of the block portion 32.

A second part 40 of the clamping means comprises an elongate member having a slightly smaller width than the interior of the cradle portion 34, and having two leg portions 42 and 44 set at an obtuse angle to one another. At one end of the part 40, on an upper face thereof, there is provided a circular recess 46, and on the other side there is provided a thumb pad 48. At the other end of the part 40, on the upper face thereof, there is formed a notch recess 50 extending transversely of the part 40. A transverse through-hole 52 extends through the leg portion 44 on which the thumb pad is provided.

A notch recess 54 and a circular recess 56, corresponding respectively precisely with the notch recess 50 and the circular recess 46, are formed on the underside of the first part 30.

The part 40 is received in the part 30 with the through-hole 52 in alignment with the pivot holes 38. A pivot pin 58 extends through all the holes 38 and 52, and a helical compression spring 60 extends between the two parts 30 and 40 with its two ends received in the recesses 46 and 56 respectively. The two notch recesses 50 and 54 are in registration with one another. They are both lined with a rubber or rubber-like lining 62.

In use, one such clamping means can be screwed into the base of any selected one of a set of differently sized pots. By depressing the thumb pad 48, the other end of the part 40 is moved away from the block portion 32, so that the jaws of the clamping means, constituted by the notch-recess-bearing portions, separate, and the pot can be clamped onto the end of a rod or pole (not shown) by placing the latter between the jaws and releasing the thumb pad 48. The lining 62 protects the rod or pole from damage.

A snap-fit connector (not shown), with a turn-to-release facility, already known in the art of connectors, may be used in place of the externally screw-threaded shank 36.

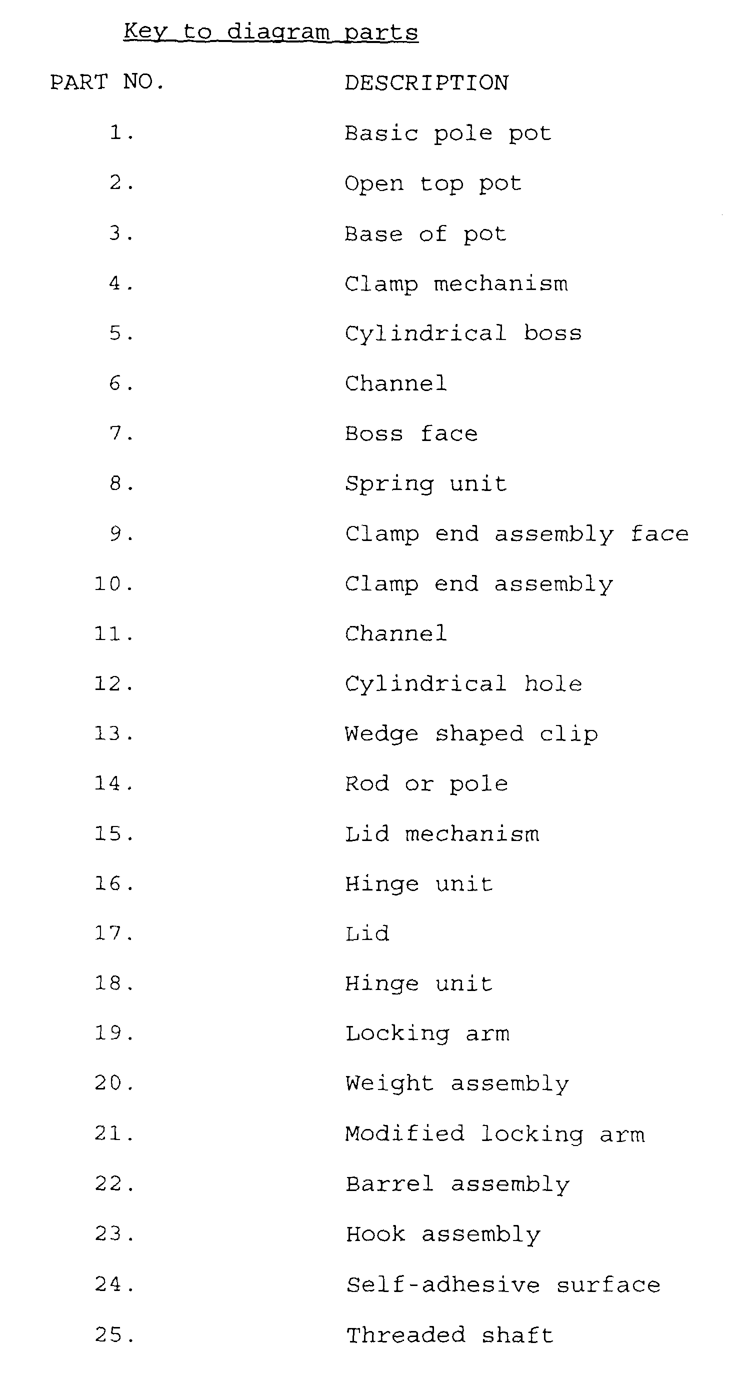

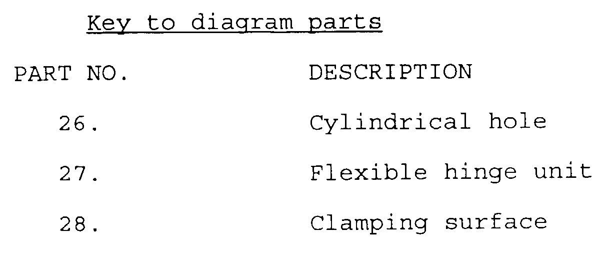

## Claims

1. A device for attachment to a fishing rod or pole and for carrying bait, the device comprising a pot, a means to attach the pot to the rod or pole, and a lid mechanism. The lid mechanism comprising any number of suitable members, prevents inadvertent discharge of the contents of the pot until it is placed in an approximate inverted position.

2. A device as in Claim 1, wherein the attachment means are in the form of a clamping mechanism comprising any number of members, the clamping force achieved by the use of a suitable elastic/spring assembly.

3. A device as in Claim 2 wherein the clamp members are provided at the base of the pot.

4. A device as in Claim 2 or 3 where the main clamping force is provided by the use of a spring or elastic assembly.

5. A device as claimed in any preceding claim wherein the clamping surfaces move relative to each other to firmly grip the rod or pole with the tension provided by a spring or elastic assembly.

6. A device as claimed in any preceding claim wherein the clamp assembly or any member of the clamp assembly may take the form of any shape or size, but function in a similar manner as described herein.

7. A device as claimed in any preceding claim wherein the clamp assembly or any member of the clamp assembly may be an integral part of the pot.

8. A device as claimed in any preceding claim wherein the clamp assembly may be separate from the pot and attached when desired.

9. A device as in Claim 1 wherein the lid mechanism operates by rotating the pole or rod with the pot correctly sited as described herein.

10. A device as in Claims 1 and 9 wherein the lid mechanism is operated with the aid of gravity on a release mechanism.

11. A device as in Claim 1 wherein the lid mechanism may be completely or partially omitted.

12. A device as in Claim 1 wherein the lid mechanism may be completely or partially integral to the pot.

13. A device as in Claim 1 wherein the lid mechanism may not be an integral part of a pot and be attached to a pot by any suitable means.
